# EUROPEAN PATENT APPLICATION

(11) **EP 4 841 754 A1**
(43) Date of publication of application: **18.11.2026**
(21) Application number: 25176253.0
(22) Date of filing: 14.05.2025
(51) Int. Cl.: H01M 10/653, H01M 10/613, H01M 10/6556, H01M 10/625, H01M 10/647, H01M 50/209, H01M 50/224, H01M 50/249, H01M 50/291, B60K 1/04, B60L 50/64

(54) **BATTERY PACK FRAME, BATTERY PACK INCLUDING THE SAME, AND ELECTRIC VEHICLE**

(71) Applicant: SAMSUNG SDI CO., LTD., Yongin-si, Gyeonggi-do 17084 (KR)
(72) Inventor: Bloder, Martin, 8261 Sinabelkirchen (AT); Burke, Thomas, 8561 Söding (AT)
(74) Representative: Gulde & Partner

(57) **Abstract**

The present disclosure refers to a battery pack frame including a top plate configured to frame one or more accommodation chambers for accommodating rechargeable battery cells, wherein the accommodation chambers are delimited by intersecting lengthwise and crosswise beams formed by the top plate; a bottom plate positioned below the top plate; a cell cooler enclosed by the top plate and the bottom plate for cooling the rechargeable battery cells, wherein the cell cooler includes sections and voids between the sections; and a foam filling a space between the top plate and the bottom plate, wherein the foam extends through the voids of the cell cooler. Further, the present disclosure also pertains to a battery pack including such a battery pack frame; a plurality of rechargeable battery cells accommodated within the battery pack frame; and battery pack frame covers for covering the accommodation chambers of the battery pack frame. Furthermore, the present disclosure relates to an electric vehicle including said battery pack.

## Description

### Field of the Disclosure

Embodiments of the present disclosure relate to a battery pack frame configured to improve mechanical load transfer and distribution as well as energy absorption. Further embodiments of the present disclosure refer to a battery pack including the battery pack frame; a plurality of rechargeable battery cells accommodated within the battery pack frame; and battery pack frame covering the accommodation chambers of the battery pack frame. Furthermore, embodiments of the present disclosure relate to an electric vehicle including the battery pack.

### Technological Background

Recently, vehicles for transportation of goods and people have been developed that use electric power as a source for motion. Such an electric vehicle is an automobile that is propelled permanently or temporarily by an electric motor using energy stored in rechargeable batteries. An electric vehicle may be solely powered by batteries (Battery Electric Vehicle BEV) or may include a combination of an electric motor and, for example, a conventional combustion engine (Plug-in Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. Common battery cell formats include for example, cylindrical, prismatic, and pouch.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common cell management unit and arranged in a housing. In the modular design, a plurality of battery cells are connected together to form submodules and several submodules are connected together to form the battery module. In automotive applications, battery systems often include a plurality of battery modules connected together in series to provide a desired voltage.

A battery pack is a set of any number of (for example identical) battery modules and/or single battery cells. The battery modules, or respectively battery cells, may be configured in series, in parallel or a mixture of both to deliver the desired voltage, capacity, and/or power density. Components of a battery pack include the individual battery modules, and the interconnections, which provide electrical conductivity between the battery modules.

The mechanical integration of a battery pack requires appropriate mechanical connections between the individual components, e.g. of battery modules, and between them and a supporting structure of the vehicle. These connections must remain functional and safe during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to the lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by, for example bolts passing through the carrier framework of the battery pack. The framework is usually made of aluminum or an aluminum alloy to lower the total weight of the construction.

As the location for the active and passive components of a battery system, the battery housing plays a decisive role in the functionality, safety, and service life of the energy storage system. It protects the sensitive components from harmful environmental influences such as water, moisture and dust and is therefore crucial for the long-term safe and reliable operation. As traction batteries are typically located outside the vehicle cabin, usually in the floor area, the housing is directly exposed to extreme environmental conditions such as temperature, humidity, splash water, salt spray, dust and stone chipping. High mechanical stability and corrosion resistance are therefore essential, even under aggressive external conditions. In addition to the environmental influences, which mainly affect the surface of the housing or the tightness of the housing, the internal and external fastening systems are of particular importance under vehicle operating conditions.

### Summary of Invention

The invention is defined by the appended claims. The description that follows is subjected to this limitation. Any disclosure lying outside the scope of the claims is only intended for illustrative as well as comparative purposes.

The device according to the present disclosure relates to a battery pack frame including a top plate configured to frame one or more accommodation chambers for accommodating rechargeable battery cells, wherein the accommodation chambers are delimited by intersecting lengthwise and crosswise beams formed by the top plate; a bottom plate positioned below the top plate; a cell cooler enclosed by the top plate and the bottom plate for cooling the rechargeable battery cells, wherein the cell cooler comprises sections and voids between the sections; and a foam filling a space between the top plate and the bottom plate, wherein the foam extends through the voids of the cell cooler.

Another embodiment of the present disclosure refers to a battery pack including said battery pack frame; a plurality of rechargeable battery cells accommodated within the battery pack frame; and battery pack frame covers covering the accommodation chambers of the battery pack frame.

Yet another embodiment of the present disclosure pertains to an electric vehicle including such a battery pack.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1A: illustrates a perspective view of a battery pack frame according to an embodiment of the present disclosure;
- FIG. 1B: represents a top view of the battery pack frame of FIG. 1A;
- FIG. 1C: is a cross-section view along line A-A of the battery pack frame illustrated in FIG. 1B;
- FIG. 1D: illustrates an enlarged section of the battery pack frame of FIG. 1C;
- FIG. 1E: shows a cross-section view along line B-B of the battery pack frame illustrated in FIG. 1B;
- FIG. 1F: represents a cross-section view along line C-C of the battery pack frame illustrated in FIG. 1B;
- FIG. 2: is a perspective view of the battery pack frame of FIG. 1A accommodating rechargeable battery cells within two accommodation chambers;
- FIG. 3A: illustrates a perspective view of a battery pack frame according to another embodiment of the present disclosure;
- FIG. 3B: represents a top view of the battery pack frame of FIG. 3A;
- FIG. 3C: is a cross-section view along line A-A of the battery pack frame illustrated in FIG. 3B;
- FIG. 3D: shows a cross-section view along line B-B of the battery pack frame illustrated in FIG. 3B;
- FIG. 4: illustrates a bottom view of a battery pack frame according to another embodiment;
- FIG. 5: is a bottom view of a battery pack frame according to another embodiment;
- FIG. 6: represents a bottom view of a battery pack frame according to another embodiment;
- FIG. 7A: illustrates a top view of a battery pack frame according to another embodiment of the present disclosure;
- FIG. 7B: shows a cross-section view along line A-A of the battery pack frame illustrated in FIG. 7A;
- FIG. 7C: illustrates a cross-section view along line C-C of the battery pack frame illustrated in FIG. 7A;
- FIG. 8A: is a perspective view of a battery pack according to another embodiment of the present disclosure;
- FIG. 8B: represents a side view of the battery pack of FIG. 8A;
- FIG. 8C: illustrates a cross-section view along line A-A of the battery pack illustrated in FIG. 8B;
- FIG. 8D: shows an enlarged section of the battery pack of FIG. 8C;
- FIG. 9A: is a top view of a battery pack according to another embodiment of the present disclosure;
- FIG. 9B: represents a cross-section view along line B-B of the battery pack illustrated in FIG. 9A; and
- FIG. 10: represents an electric vehicle including the battery pack of FIG. 8A.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The term "consisting essentially of" means that specific further components can be present, namely those not materially affecting the essential characteristics of a composition.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one embodiment of the present disclosure, a battery pack frame includes a top plate, a bottom plate, a cell cooler, and a foam. The top plate is configured to frame one or more accommodation chambers for accommodating rechargeable battery cells. The accommodation chambers are delimited by intersecting lengthwise and crosswise beams formed by the top plate. The bottom plate is positioned below the top plate. Further, the cell cooler is enclosed by the top plate and the bottom plate for cooling the rechargeable battery cells. The cell cooler includes sections and voids between the sections. Furthermore, the foam is filling a space between the top plate and the bottom plate, wherein the foam extends through the voids of the cell cooler.

In other words, the outer form of a battery pack frame for accommodating rechargeable battery cells of a battery pack is determined by a top plate and a bottom plate being connected to each other. Beams are formed within the top plate along its longitudinal side, e.g. the long side, and its transversal side, e.g. the short side. The two different types of beams, i.e. the beams along the long side and the short side of the top plate, intersect each other in such a way that that one or more accommodation chambers for hosting rechargeable battery cells are formed.

The bottom plate is located below the top plate fulfilling the purpose of an underride protection of the battery pack against mechanical or environmental influences like e.g. humidity, splash water, dust and stone chipping.

Further, a cell cooler is located between the top plate and the bottom plate designed for cooling the rechargeable battery cells during operating conditions, i.e. charging and discharging of the rechargeable battery cells. Said cell cooler includes voids, i.e. openings, such that sections of the cell cooler alternate with the voids. The cell cooler may consist of one cooling unit such that the voids are located within this unit dividing the cooling unit into several cooling sections. The cooling sections of the cooling unit may be mechanically connected with each other by means of connecting elements so that the cell cooler may be a one-piece component. The connecting elements may also fulfil a cooling function such that the connecting elements include at least some coolant carrying sections. On the other hand, it may be possible that the battery pack frame includes a cell cooler consisting of a plurality of cooling units, e.g. there is one cooling unit underneath each accommodation chamber. Here too, the voids may be located between the cooling units, irrespective of the presence of any voids within these cooling units.

Further according to the present disclosure, a foam is filled in a space between the top plate and the bottom plate such that the cell cooler is embedded in the foam. In particular, the foam fills areas between the top plate and the cell cooler, and areas between the cell cooler and the bottom plate. The foam-filled areas between the cell cooler and the top plate, and between the cell cooler and the bottom plate are connected to each other through the voids of the cell cooler. This means that the foam-filled areas in the upper part of the battery pack frame, i.e. inside the beams, and the foam-filled areas in the underbody part of the battery pack frame, i.e. between the cell cooler and the bottom plate, contact each other.

A battery pack frame according to the present disclosure is beneficial in various aspects. Firstly, the foam as filling material may increase mechanical stability of battery pack frame, insofar as the foam provides mechanical load transfer and distribution as well as energy absorption in a battery pack. If, for example, a shock primarily acts locally on an area of the battery pack frame, this mechanical impulse is distributed by the foam over the entire battery pack frame. The voids in the cell cooler through which the foam-filled areas above and below the cell cooler are in contact with each other are of particular importance. Assuming, for example, the scenario that an impact occurs from the underside of the bottom plate, the impact may be distributed via the foam over the entire foam-filled areas including the areas between the bottom plate and the cell cooler, as well as the foam-filled areas between the cell cooler and the top plate. Secondly, the increased mechanical stability also directly results in an increased battery safety, as damages of the rechargeable battery cells possibly leading to a thermal runaway event may be reduced. Thirdly, the battery pack frame may be a one-piece component, i.e. the battery pack frame is monolithic. This makes it possible to design the battery pack frame in a particularly space-saving way. Especially for mobile applications, the available space for battery components is very limited. Furthermore, when installing the battery pack frame as a one-piece component, the assembly time may be shortened and the logistic effort may be reduced.

According to an embodiment, the top plate, the bottom plate and the cell cooler may be metal plates. This may simplify the processing of these components. In particular, molding the beams from the top plate may become easier when using a metal plate. Regarding the cell cooler, the use of metals with a high thermal conductivity, such as aluminum and copper, may be particularly advantageous since locally released heat may be distributed efficiently reducing the likelihood of the rechargeable battery cells overheating.

According to another embodiment, the top plate and the bottom plate may be held together by at least one of welding, soldering, clinching, screwing, bolting, and the foam. For example, the battery pack frame may be held together both by screws and by the foam. In this way, the foam not only fulfils the purpose of improving mechanical load and distribution within the battery pack frame, but it may also contribute to holding the top plate and the bottom plate together.

According to yet another embodiment, the top plate may include one or more cut-outs in the area of a bottom side of each accommodation chamber such that the cell cooler contacts the rechargeable battery cells on its upper side while contacting the foam on its lower side. The cut-outs may correspond to a portion of the bottom sides or alternatively the cut-outs may correspond essentially to the entire area of the bottom sides, i.e. the cut-outs extend over the majority of the area of the bottom sides. It is particularly advantageous if the cut-out essentially corresponds to the entire area of the bottom side of the accommodation chambers. Accordingly, the bottom side of each accommodation chamber is built by the cell cooler. This means that the underside of the rechargeable battery cells touches the top of the cell cooler after assembly in the accommodation chambers while the foam is underneath the cell cooler. The contact between the rechargeable battery cells and the cell cooler may contribute significantly to efficient heat distribution, while filling the space between the cell cooler and the bottom plate with the foam may improve stability of the battery pack since the weight of the rechargeable battery cells may be efficiently distributed over the foam-filled space.

According to a further embodiment, one or more reinforcement elements may be installed in tie-in points of the lengthwise and crosswise beams. The reinforcement elements may be designed as bracings so that in the area of the intersecting beams, the reinforcement elements may be attached to the beams and abut on the upper side of the bottom side of the accommodation chambers. On the other hand, the reinforcement elements may also be attached to the bottom side of the accommodation chambers and abut on the beams. The reinforcement elements may be made from tubing or roll formed sheet metal. In this way, the mechanical load on the battery pack frame, e.g. during operation or in the event of an accident, may be efficiently distributed over the battery pack frame reducing the likelihood of damage of one or more beams.

According to yet another embodiment, the battery pack frame may further include hollow tubes being embedded within the foam and extending along the outer lengthwise beams of the battery pack frame. The hollow tubes may contribute to additional load distribution from the tie-in points as well as from the reinforcement elements for side-impacts. The hollow tubes may have a shape selected from the group consisting of rectangular, square, round, and elliptical.

According to another embodiment, the bottom plate may include pressed features selected from the group including pot-like dimple elements, trapezoid shaped ribbing, and corrugated wave shapes. Said design of the bottom plate may contribute to an efficient distribution and conversion of impact forces from below of the battery pack frame. In this way, the risk of serious damage of one of the battery pack, e.g. in the event of an accident, may be reduced.

According to yet another embodiment, the cell cooler may be a roll-bonding cooler. A roll-bonding cooler may be beneficial since, on the one hand, the roll-bonding cooler may be easily inserted into the structure of the battery pack frame, i.e. between the top plate and the bottom plate. On the other hand, the roll-bonding cooler may efficiently dissipate the heat from the rechargeable battery cells under normal operating conditions, i.e. charging and discharging, such that the rechargeable battery cells may not overheat.

According to a further embodiment, the voids of the cell cooler may be located underneath the lengthwise and crosswise beams. In this way, the foam may be filled in during assembly of the battery pack. Furthermore, the areas filled with foam in the beams, and the areas filled with foam between the cell cooler and the bottom plate are contacting each other through the voids of the cell cooler enabling a monolithic foam body below and above the cell cooler.

According to another embodiment, the foam may essentially consist of polyurethane. Polyurethanes may be particularly suitable since these compounds are relatively inexpensive to produce and their mechanical properties, such as density and moldability, can be varied within a wide range by the degree of crosslinking and the type of monomers used.

According to yet another embodiment, the foam may be composed of two or more materials differing in at least one of density and stiffness, wherein the space between the top plate and the bottom plate may be divided in as many spatially separated areas as there are materials so that each material may fill a spatially separated area of the space between the top plate and the bottom plate. In other words, the foam may essentially consist of two or more different materials. Each of these foam materials fills spatially delimited areas in the battery pack frame. In this way, the mechanical characteristics of the battery pack frame may be further improved. Such a combination of different foams may be achieved by firstly pre-molding a first foam material into the desired shape. These pre-shaped foam structures then get inserted to the battery pack frame before the top plate and the bottom plate are closed together. The bonding of the first foam material may either be done by gluing them to the other components during the assembly of the outer hull, or the first foam material may be bonded in place and to the other components by a second foam material being injected to the battery pack frame after the outer assembly is put together.

According to a further embodiment, a battery pack includes one battery pack frame as described above; a plurality of rechargeable battery cells accommodated within the battery pack frame; and battery pack frame covers covering the accommodation chambers of the battery pack frame. In other words, a number of rechargeable battery cells are assembled in a stack. Prismatic battery cells may be particularly suitable since, for example, the long sides of the prismatic battery cells may be arranged adjacent to each other. For example, each accommodation chamber formed by the top plate may host one of these battery cell stacks. The battery cell stacks, respectively the rechargeable battery cells, may be configured in a series, parallel or a mixture of both to deliver the desired voltage, capacity and power density. The battery cell stacks may be connected by electrical means providing electrical conductivity between the battery cell stacks. Moreover, the battery pack may include further components like, for example, a battery management system (BMS), which is any suitable electronic system that is configured to manage the battery pack, such as by protecting the rechargeable battery cells from operating outside their safe operating area, monitoring their states, calculating secondary data, reporting that data, controlling its environment, authenticating it and balancing it.

According to another embodiment, each of the battery pack frame covers may be configured to maintain pressure on the rechargeable battery cells. This may be achieved, for example, by designing the battery pack frame covers in such a way that they are pre-tensioned before installation of the rechargeable battery cells. Accordingly, after assembly of the rechargeable battery cells, the battery pack frame covers exert pressure on the rechargeable battery cells from the top over the entire battery cell stacks. This ensures that the underside of the rechargeable battery cells contacts the cell cooler so that efficient heat dissipation may be possible. Further, said configuration of the battery pack frame covers may contribute to a mechanical stability of the battery pack by sufficiently firmly attaching the rechargeable battery cells.

According to yet another embodiment, the battery pack frame covers may include corrugations configured to form vent-gas channels over the rechargeable battery cells. These corrugations may be the actual portions of the battery pack frame cover that are exerting pressure on the rechargeable battery cells. Further, a battery cell vent cover may be clamped between the top side of the rechargeable battery cells and the battery pack frame cover, wherein the battery cell vent cover may essentially consist of an elastic material. In this way, the pre-tension of the battery pack frame covers may ensure mechanical stability of the battery pack. In particular, height differences of the rechargeable battery cells may effectively be compensated and the pressure exerted on the rechargeable battery cells may be minimized. Further, the battery pack frame covers may also contribute to the safety of the battery pack by forming the vent-gas channels, as the release of hot venting products from at least one of the rechargeable battery cells requires efficient dissipation of the hot venting products in order to avoid possible consequential damage of the battery pack.

A further embodiment pertains to an electric vehicle including the above-mentioned battery pack.

### Specific Embodiments

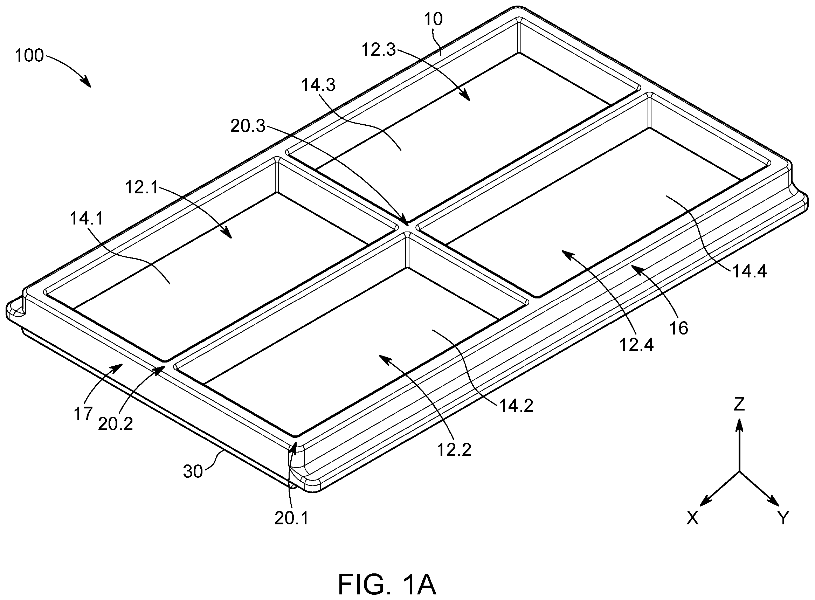

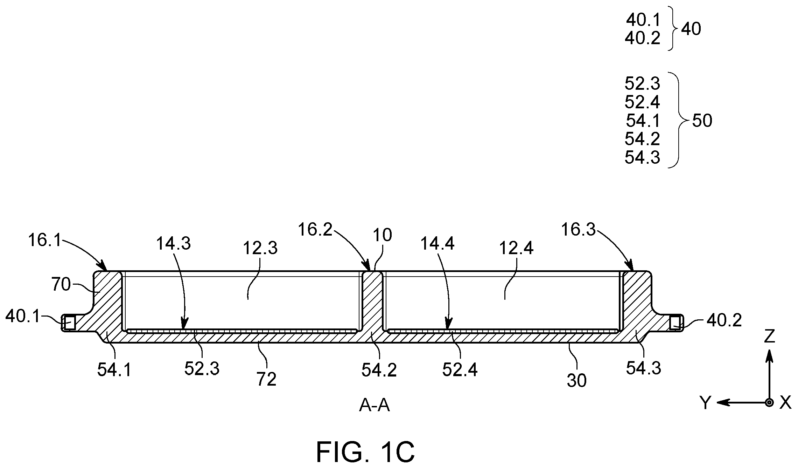

FIG. 1A is a perspective view illustrating an exemplary battery pack frame 100 according to an embodiment of the present disclosure. The battery pack frame 100 includes a top plate 10, a bottom plate 30, a cell cooler 50 (not shown in FIG. 1A, see FIG. 1C) and a foam 70 (not shown in FIG. 1A, see FIG. 1C). In FIG. 1A, the X-axis may refer to a longitudinal direction of top plate 10, the Y-axis may refer to a transversal direction of top plate 10, and the Z-axis may refer to a height direction of the battery pack frame 100. These axis definitions may also apply to the following figures. The outer shape of the battery pack frame 100 is determined by the top plate 10 and the bottom plate 30 positioned below the top plate 10. Beams 16,17 are molded through the top plate 10. More precisely, there are two different types of beams: one type of beams extends along the longitudinal side of the top plate 10, i.e. lengthwise beams 16, and the other type of beams extends along the transversal side of the top plate 10, i.e. crosswise beams 17. The lengthwise and crosswise beams 16,17 intersect at tie-in points 20.1-20.3. Four accommodation chambers 12.1-12.4 for accommodating rechargeable battery cells 90 (not shown in FIG. 1A) are formed by the intersecting lengthwise and crosswise beams 16,17. In this way, each of the accommodation chambers 12.1-12.4 is delimited laterally by two lengthwise and crosswise beams 16,17. A boundary downwards within the accommodation chambers 12 is realized by bottom sides 14.1-14.4.

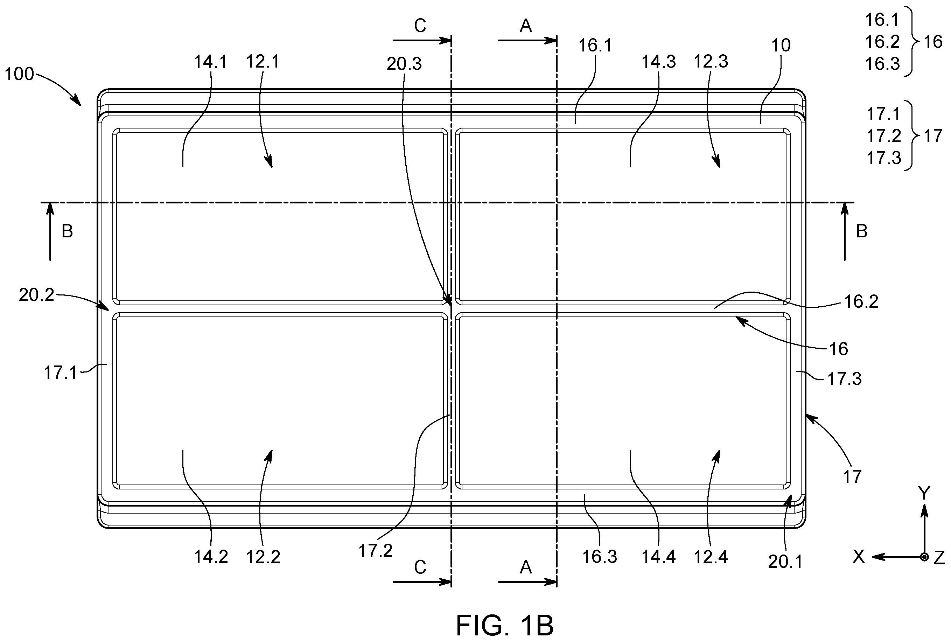

FIG. 1B represents a top view on the battery pack frame 100 of FIG. 1A. The FIG. 1B illustrates the battery pack frame 100 having the four accommodation chambers 12.1-12.4 which are divided by the lengthwise and crosswise beams 16,17.

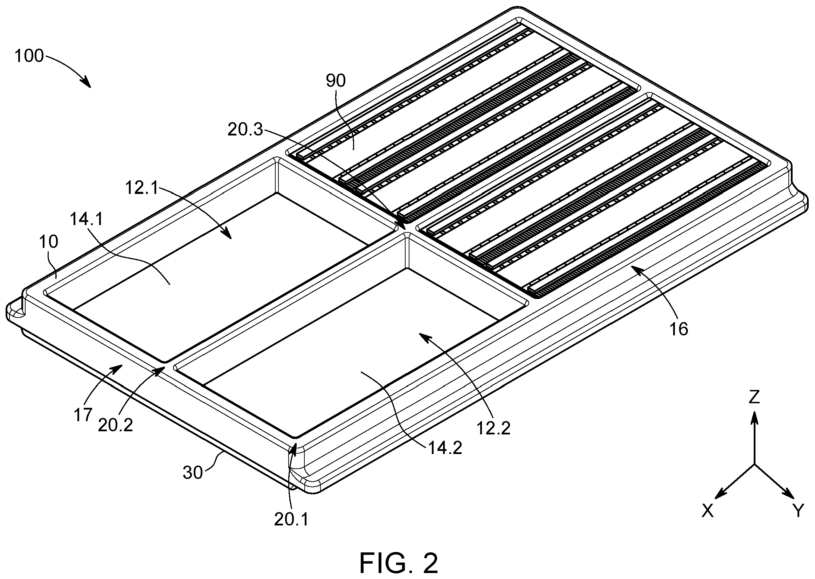

FIG. 1C shows a cross-section along line A-A of the battery pack frame 100 illustrated in FIG. 1B. As shown in FIG. 1B, the line A-A extends in transversal direction through the accommodation chambers 12.3,12.4. Accordingly, the accommodation chambers 12.3,12.4 are delimited laterally by the lengthwise beams 16.1-16.3 formed by the top plate 10. The battery pack frame 100 is bounded vertically by the top plate 10 and the bottom plate 30. The longitudinal beams 16.1-16.3 are formed within the top plate 10. The cell cooler 50 is positioned between the top plate 10 and the bottom plate 30. The cell cooler 50 is characterized by having voids 54.1-54.3 between sections 52.3,52.4 of the cell cooler 50. The voids 54.1-54,3 are located underneath the lengthwise beams 16.1-16.3. Further, the top plate 10 includes cut-outs in the area of the bottom sides 14.3,14.4 of the accommodation chambers 12.3,12.4 such that the cell cooler 50 is essentially not covered by the top plate 10 in the area of the bottom sides 14.3,14.4. As a result, the rechargeable battery cells 90 (not shown, see FIG. 2) and the cell cooler 50 are contacting each other after assembly enabling more effective cooling than if there were positioned an additional component, i.e. the top plate 10, between the rechargeable battery cells 90 and the cell cooler 50. A further essential feature of the disclosure consists in that a foam 70 filling a space 72 between the top plate 10 and the bottom plate 30 embeds the cell cooler 50. The foam 70 fills the space 72 within the lengthwise beams 16 and between the cell cooler 50 and the bottom plate 30, wherein the voids 54 of the cell cooler 50 located underneath the lengthwise beams 16 enable connectivity of the foam 70 throughout the entire battery pack frame 100. In this way, the foam 70 is easily filled in during assembly and a direct coupling of the foam 70 in the lengthwise beams 16 with the foam 70 filled between the cell cooler 50 and the bottom plate 30 is ensured. Due to this direct coupling of the foam-filled areas, improved mechanical load transfer and distribution as well as energy absorption within the battery pack frame 100 is provided. Further, two rectangular hollow tubes 40.1,40.2 are embedded within the foam 70 and extend along the outer lengthwise beams 16.1,16.3. The hollow tubes 40.1,40.2 contribute to additional load distribution from the tie-in points 20 for side-impacts.

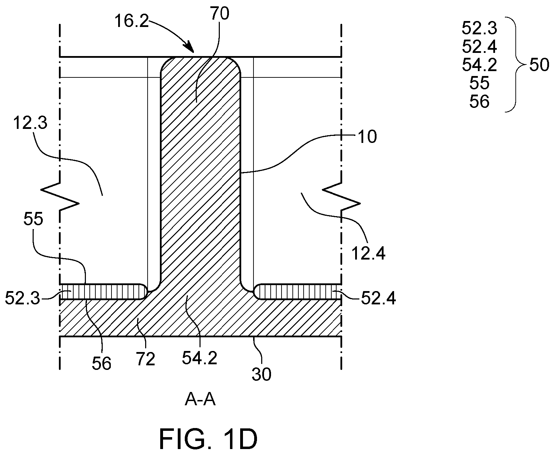

An enlarged section of the battery pack frame 100 of FIG. 1C is illustrated in FIG. 1D. More precisely, FIG. 1D shows a section around the lengthwise beam 16.2 separating the accommodation chambers 12.3,12.4. As shown, the foam 70 is filling the space 72 between the top plate 10 and the bottom plate 30. Further, the cell cooler 50 includes the two sections 52.3,52.4 separated by the void 54.2 underneath the lengthwise beam 16.2. The cell cooler 50 is mounted in such a way that the upper side of the cell cooler 50 contacts the rechargeable battery cells 90 (not shown) while the lower side of the cell cooler 56 contacts the foam 70. The contact between the cell cooler 50 and the rechargeable battery cells 90 ensures efficient cooling of the rechargeable battery cells 90 under operating conditions. The lining with the foam 70 contributes to mechanical stability of the battery pack frame 100 as forces acting on the cell cooler 50 may be better distributed through the entire battery pack frame 100.

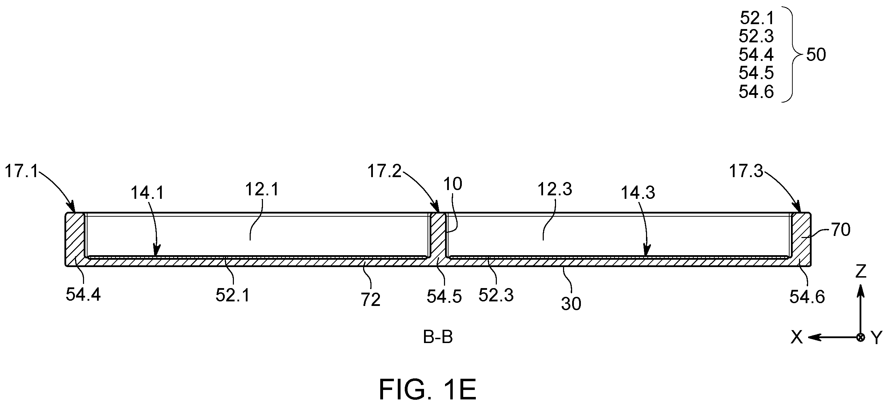

FIG. 1E is a cross-section along line B-B of the battery pack frame 100 illustrated in FIG. 1B. As shown in FIG. 1B, the line B-B extends in longitudinal direction through the accommodation chambers 12.1,12.3. Accordingly, the accommodation chambers 12.1,12.3 are delimited laterally by the crosswise beams 17.1-17.3 formed by the top plate 10. The cell cooler 50 including the sections 52.1,52.3 and the voids 54.4-54.6 is enclosed by the top plate 10 and the bottom plate 30, wherein the space 72 between the top plate 10, bottom plate 30, cell cooler 50 is filled by the foam 70. The voids 54.4-54.6 within the cell cooler 50 are located in each case underneath the crosswise beams 17.1-17.3 enabling easy filling of the foam 70 during assembly as well as ensuring contact of the foam 70 filled inside the crosswise beams 17.1-17.3, with the foam 70 being filled between the cell cooler 50 and the bottom plate 30.

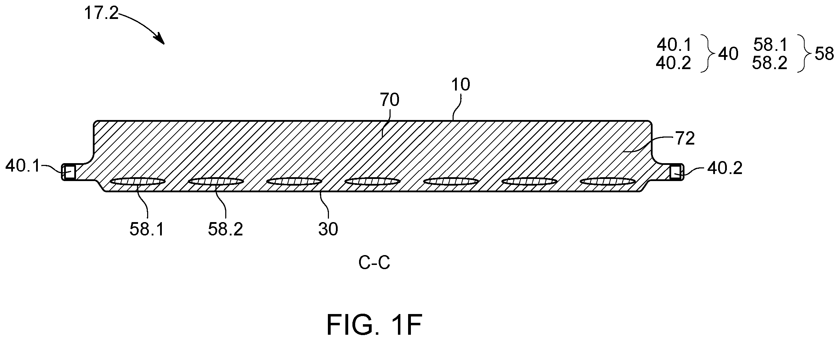

FIG. 1F represents a cross-section along line C-C of the battery pack frame 100 illustrated in FIG. 1B. As shown in FIG. 1B, the line C-C extends in transversal direction through a crosswise beam 17 of the battery pack frame 100. More precisely, a cross-section of the crosswise beam 17.2 is represented. As it can be seen, the outer shape of the crosswise beam 17.2 is determined by the top plate 10 and the bottom plate 30. The space 72 between the top plate 10 and the bottom plate 30 is filled with the foam 70 embedding the two rectangular hollow tubes 40.1,40.2 and connecting elements 58 of the cell cooler 50. The connecting elements 58 of the cell cooler 50 mechanically connect the cooler sections 52 of the cell cooler 50.

FIG. 2 is a perspective view on the battery pack frame 100 of FIG. 1A accommodating a plurality of rechargeable battery cells 90 in the accommodation chambers 12.3,12.4.

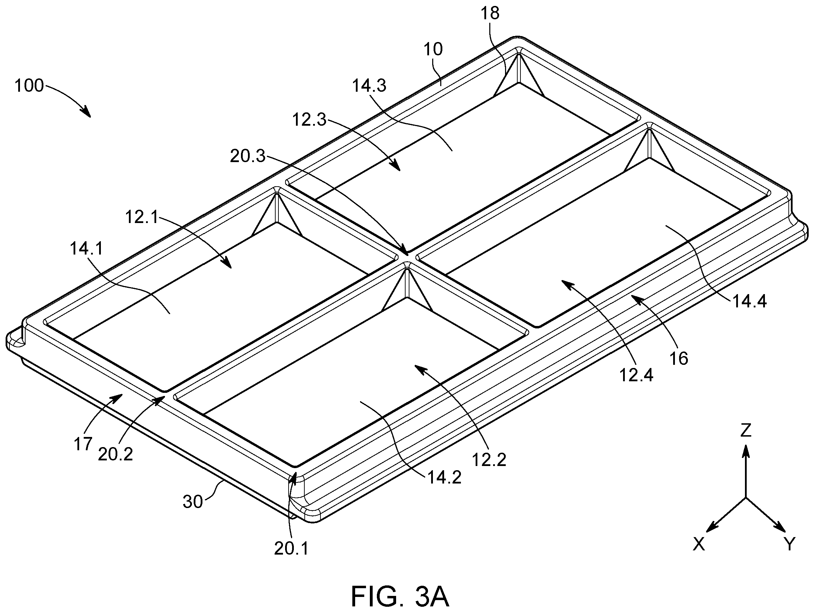

FIG. 3A illustrates a perspective view of a battery pack frame 100 according to another embodiment of the present disclosure. The battery pack frame 100 differs from the battery pack frame 100 shown in FIG. 1A essentially in the presence of reinforcement elements 18. For reasons of redundancy, exclusively the reinforcement elements 18 and their effects on the battery pack frame 100 will be discussed in more detail below. The reinforcement elements 18 are installed in tie-in points 20.1-20.3 of the lengthwise and crosswise beams 16,17. The reinforcement elements 18 are designed such that they start from the beams 16,17 and rest on the upper side of the bottom side 14 of the accommodation chambers 12. Further, the reinforcement elements 18 are made from tubing or roll formed sheet metal. In this way, the mechanical load on the battery pack frame 100, e.g. during charging and discharging or in the event of an accident, may be efficiently distributed over the battery pack frame 100 reducing the likelihood of damage of one or more beams 16,17.

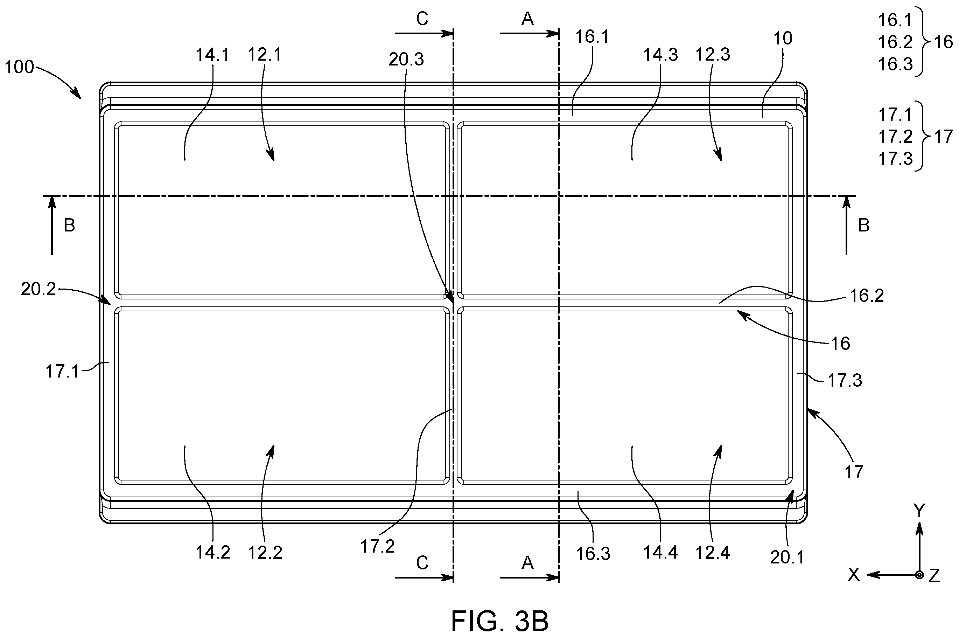

FIG. 3B represents a top view of the battery pack frame 100 of FIG. 3A. For reasons of perspective, the reinforcement elements 18 are not visible in FIG. 3B.

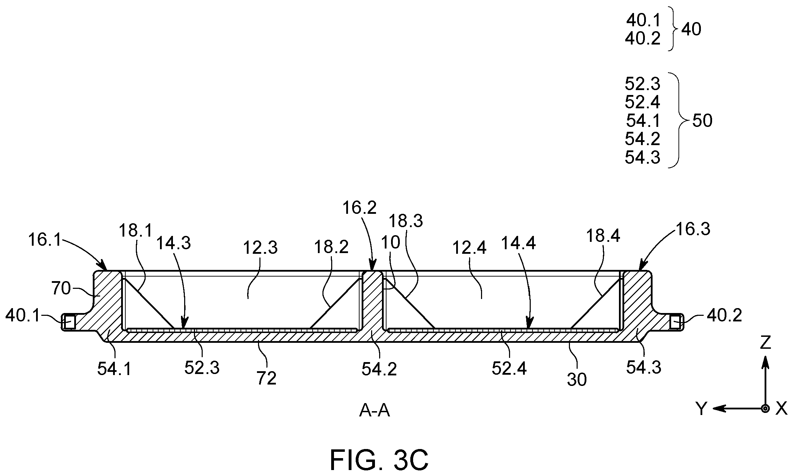

FIG. 3C shows a cross-section along line A-A of the battery pack frame 100 illustrated in FIG. 3B. As shown in FIG. 3B, the line A-A extends in transversal direction through the accommodation chambers 12.3,12.4. Accordingly, the accommodation chambers 12.3,12.4 are delimited laterally by the lengthwise beams 16.1-16.3 formed by the top plate 10. In contrast to the battery pack frame 100 as illustrated in FIG. 1C, the reinforcement elements 18.1-18.4 are present. The reinforcement elements 18.1-18.4 are attached to the lengthwise beams 16.1-16.3 and abut to the bottom sides 14.3,14.4 of the accommodation chambers 12.3,12.4. Further, two rectangular hollow tubes 40.1,40.2 are embedded within the foam 70 and extend along the outer lengthwise beams 16.1,16.3. The hollow tubes 40.1,40.2 contribute to additional load distribution from the tie-in points 20 as well as from the reinforcement elements 18 for side-impacts.

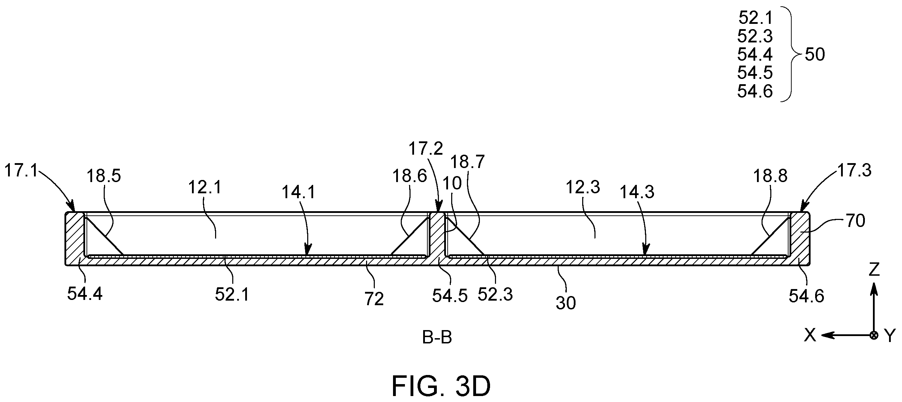

FIG. 3D is a cross-section along line B-B of the battery pack frame 100 illustrated in FIG. 3B. As shown in FIG. 3B, the line B-B extends in longitudinal direction through the accommodation chambers 12.1,12.3. Accordingly, the accommodation chambers 12.1,12.3 are delimited laterally by the crosswise beams 17.1-17.3 formed by the top plate 10. In contrast to the battery pack frame 100 as illustrated in FIG. 1E, the reinforcement elements 18.5-18.8 are present. The reinforcement elements 18.5-18.8 are attached to the crosswise beams 17.1-17.3 and abut to the bottom sides 14.1,14.3 of the accommodation chambers 12.1,12.3.

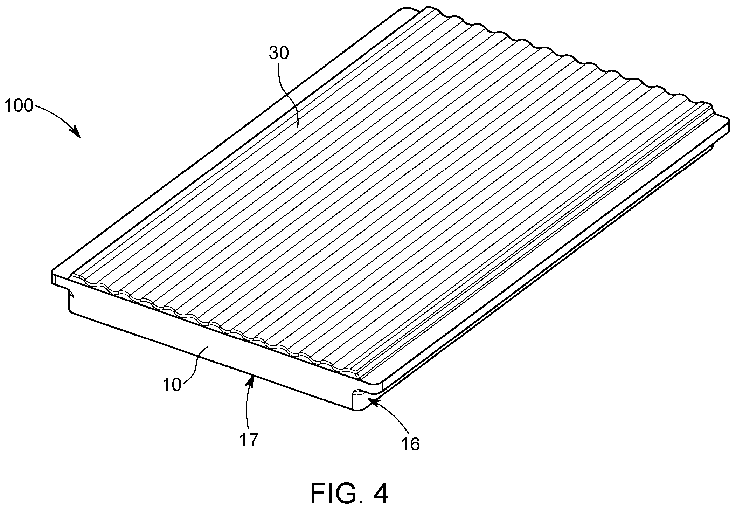

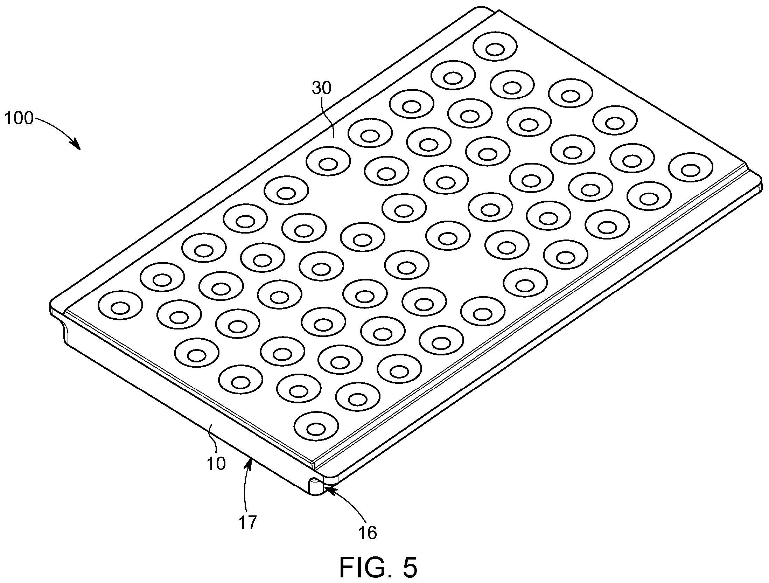

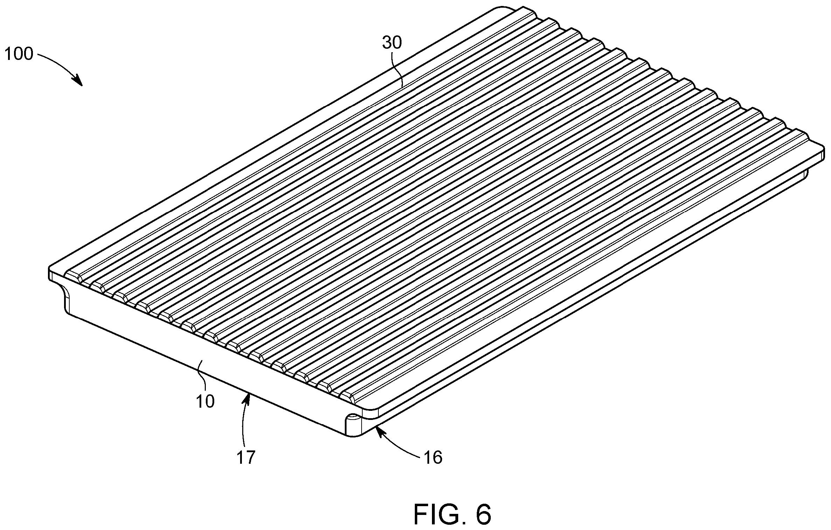

Each of FIGS. 4, 5 and 6 shows a bottom view of a battery pack frame 100 according to other embodiments of the present disclosure. The bottom plate 30 includes additional pressed features for the distribution and conversion of impact forces. Regarding the embodiments, the bottom plate 30 in FIG. 4 incorporates corrugated wave shapes elements; the bottom plate 30 in FIG. 5 incorporates pot-like dimple elements; and the bottom plate 30 in FIG. 6 incorporates trapezoid shaped ribbing.

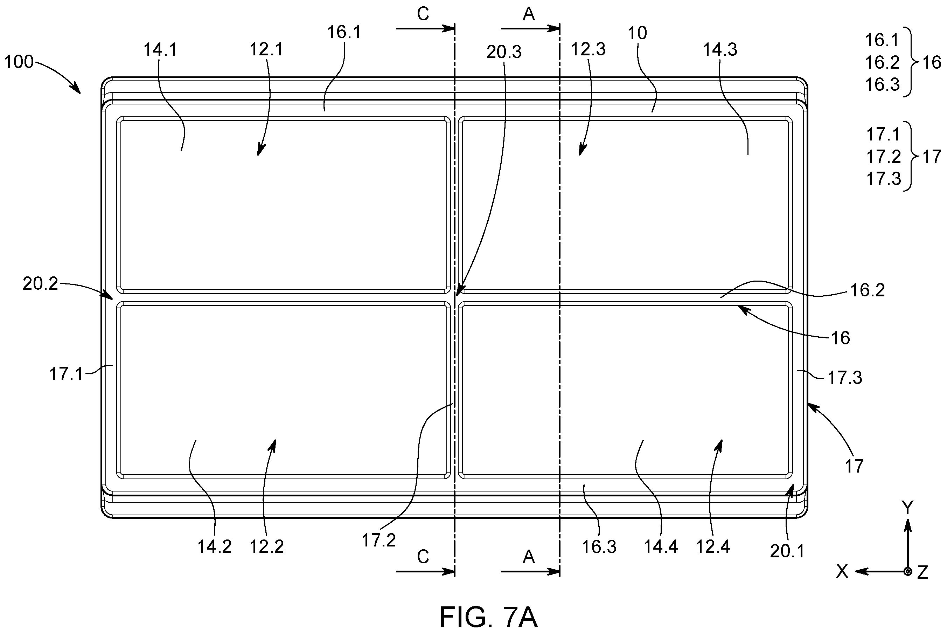

FIG. 7A illustrates a top view on a battery pack frame 100 according to another embodiment of the present disclosure.

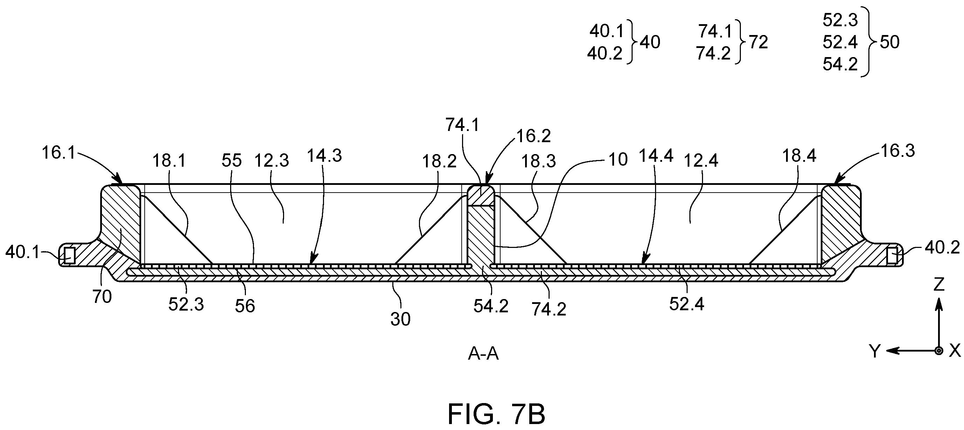

FIG. 7B shows a cross-section along line A-A of the battery pack frame 100 illustrated in FIG. 7A. As shown in FIG. 7A, the line A-A extends in transversal direction through the accommodation chambers 12.3,12.4. Accordingly, the accommodation chambers 12.3,12.4 are delimited laterally by the lengthwise beams 16.1-16.3 formed by the top plate 10. In accordance to the embodiment illustrated in FIG. 3C, the reinforcement elements 18.1-18.4 are present. The reinforcement elements 18.1-18.4 are attached to the lengthwise beams 16.1-16.3 and abut to the bottom side 14.3,14.4 of the accommodation chambers 12.3,12.4. However, in contrast to the embodiment illustrated in FIG. 3C, two different types of foam materials are filled into two different, separated areas 74.1,74.2 within the space 72 between the top plate 10 and the bottom plate 30. In the present case, the foam materials essentially differ in their densities, i.e. one foam material has a higher density than the other foam material. In this specific embodiment, the area 74.1 showing a tight hatching pattern is filled by a first foam material and the area 74.2 showing a loose hatching pattern is filled by a second foam material having a smaller density compared to the first foam material. Such a combination of different foam materials can be achieved by firstly pre-molding a first foam material into the desired shape. These pre-shaped foam structures then get inserted to the battery pack frame 100 before the top plate 10 and the bottom plate 30 are closed together. The first foam material is bonded in place by the second foam material being injected to the battery pack frame after the outer assembly is put together. By using different types of foam materials, the mechanical characteristics of the battery pack frame 100 as outlined above may further be improved. Further, two rectangular hollow tubes 40.1,40.2 are embedded within the foam 70 and extend along the outer lengthwise beams 16.1,16.3. The hollow tubes 40.1,40.2 contribute to additional load distribution from the tie-in points 20 as well as from the reinforcement elements 18 for side-impacts.

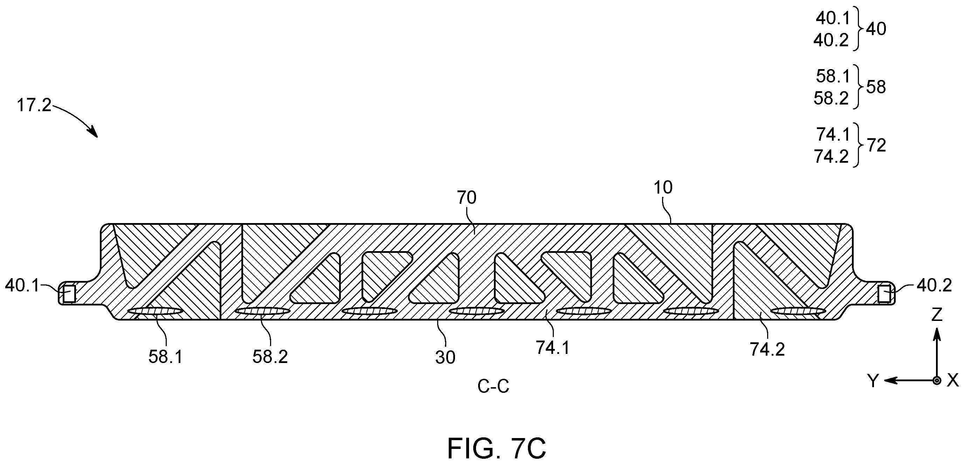

FIG. 7C represents a cross-section along line C-C of the battery pack frame 100 illustrated in FIG. 7A. As shown in FIG. 7A, the line C-C extends in transversal direction through a crosswise beam 17 of the battery pack frame 100. More precisely, a cross-section of the crosswise beam 17.2 is represented. The space 72 between the top plate 10 and the bottom plate 30 is filled with the foam 70 embedding the two rectangular hollow tubes 40.1,40.2 and connecting elements 58 of the cell cooler 50. The connecting elements 58 of the cell cooler 50 mechanically connect the cooler sections 52 of the cell cooler 50. The space 72 between the top plate 10 and the bottom plate 30 consists of two different areas 74.1,74.2 being filled with a foam material of higher density, i.e. within the tight hatched area 74.1, and a foam material of lower density, i.e. within the loosely hatched area 74.2.

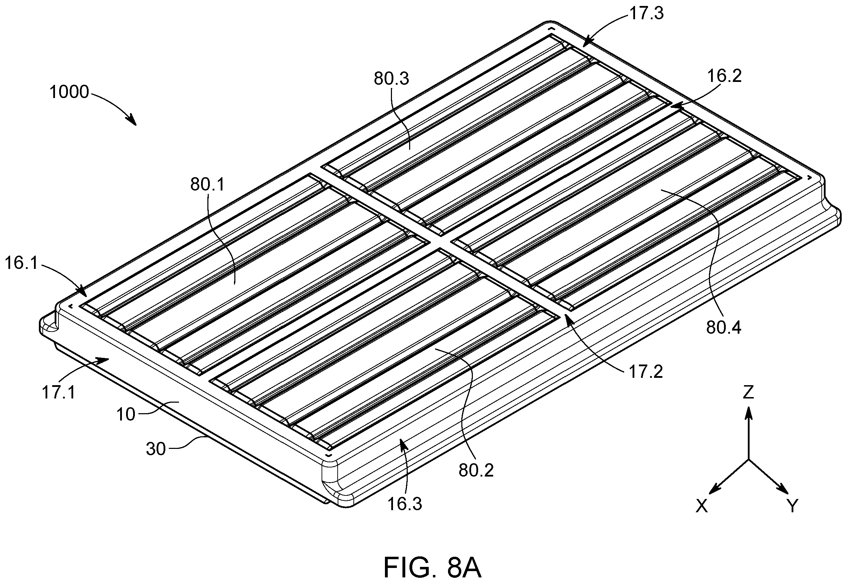

FIG. 8A is a perspective view of a battery pack 1000 according to another embodiment of the present disclosure. The battery pack 1000 includes one battery pack frame 100, for example a battery pack frame 100 as illustrated in FIG. 3A; a plurality of rechargeable battery cells 90 (not shown) accommodated within the battery pack frame 100; and battery pack frame covers 80.1-80.4 covering the accommodation chambers 12.1-12.4 (not shown) of the battery pack frame 100. The battery pack 1000 includes further features (not shown) like electrical means for connecting the rechargeable battery cells 90, like e.g. a busbar, and components for monitoring the state of the rechargeable battery cells like, for example, a battery management system (BMS).

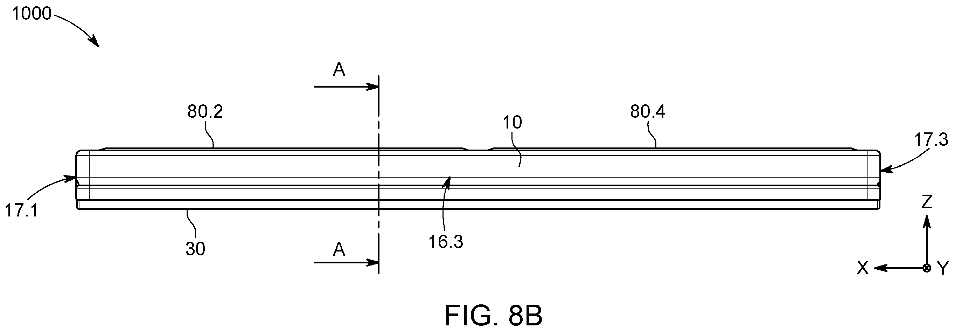

FIG. 8B illustrates a side view of the battery pack 1000 shown in FIG. 8A.

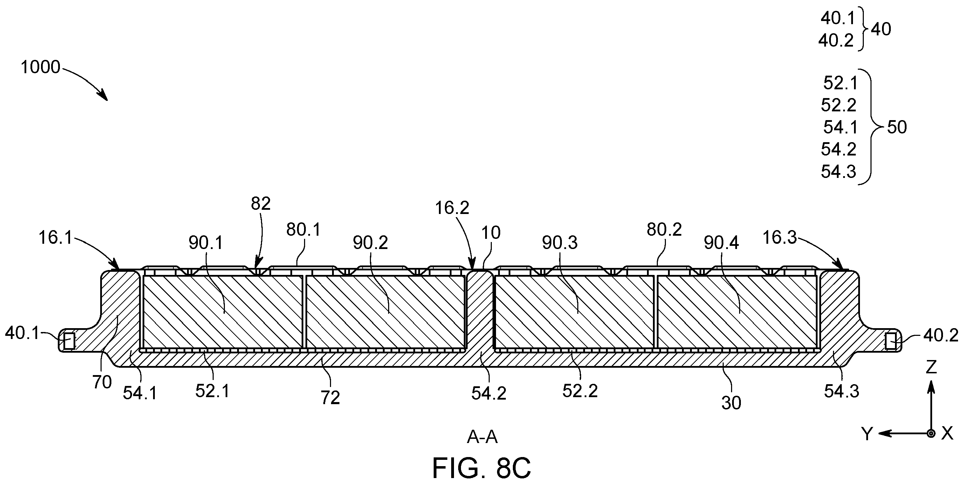

FIG. 8C shows a cross-section along line A-A of the battery pack 1000 illustrated in FIG. 8B. The rechargeable battery cells 90.1-90.4 are covered by the battery pack frame covers 80.1,80.2. The battery pack frame covers 80.1,80.2 include corrugations 82 exerting pressure on the upper side of the rechargeable battery cells 90.1-90.4. Further, two rectangular hollow tubes 40.1,40.2 are embedded within the foam 70 and extend along the outer lengthwise beams 16.1,16.3. The hollow tubes 40.1,40.2 contribute to additional load distribution for side-impacts.

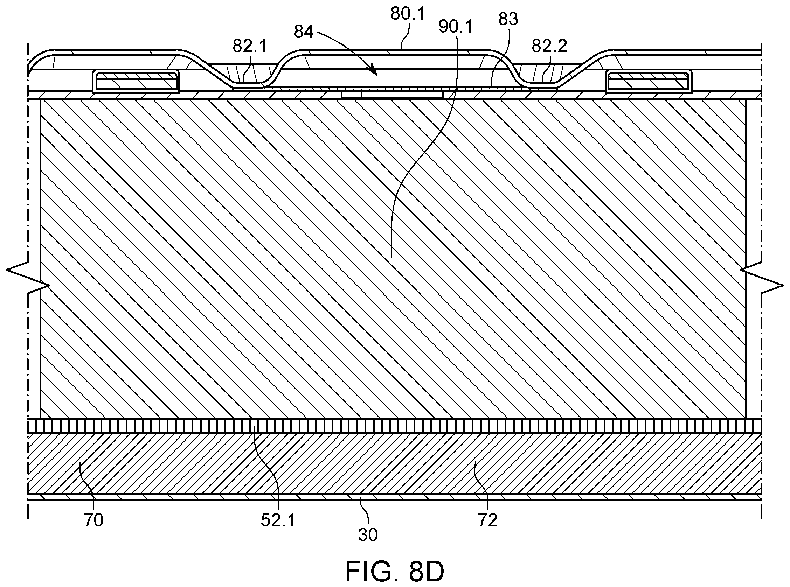

An enlarged section of the battery pack 1000 of FIG. 8C is illustrated in FIG. 8D. More precisely, FIG. 8D shows a section around the rechargeable battery cell 90.1. The bottom of the rechargeable battery cell 90.1 contacts the section 52.1 of the cell cooler 50 while the top of the rechargeable battery cell 90.1 is pressed down by the corrugations 82.1,82.2 built by the battery pack frame cover 80.1. The corrugations 82.1,82.2 of the battery pack frame cover 80.1 form a vent-gas channel 84 above the rechargeable battery cell 90.1. In this way, an efficient dissipation of hot venting products from the rechargeable battery cell 90.1 is ensured avoiding possible consequential damage of the battery pack. On the other side, the rechargeable battery cell 90.1 is protected from hot venting products released by one or more other rechargeable battery cells 90 by means of a battery cell vent cover 83 being clamped in between the top side of the rechargeable battery cell 90.1 and the corrugations 82.1 and 82.2 of the battery pack frame cover 80.1. The battery cell vent cover 83 essentially consists of an elastic material ensuring that height differences between the rechargeable battery cells 90 and further rechargeable battery cells 90 can be compensated, and that a minimum pressure on the rechargeable battery cell 90.1 is exerted.

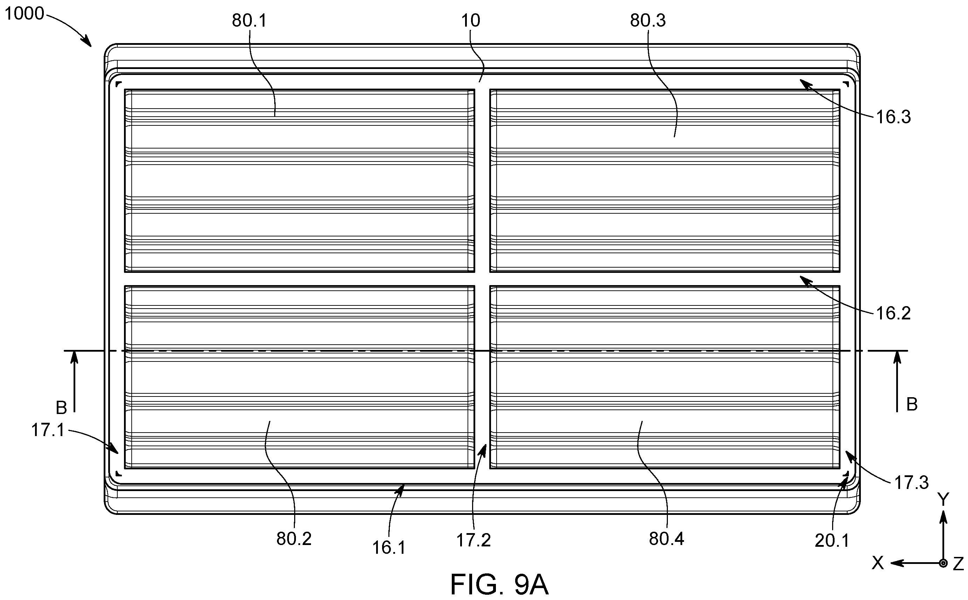

FIG. 9A illustrates a top view of a battery pack 1000 according to a further embodiment of the present disclosure.

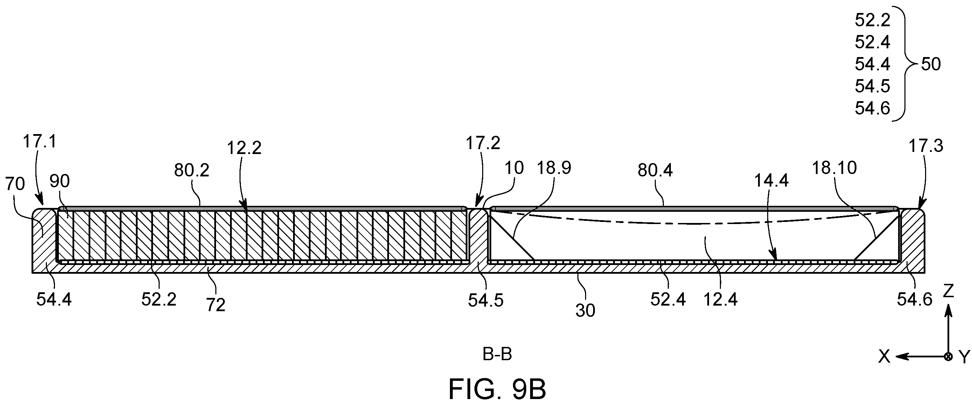

FIG. 9B shows a cross-section along line B-B of the battery pack 1000 illustrated in FIG. 9A. As shown in FIG. 9A, the line B-B extends in longitudinal direction through the accommodation chambers 12.2,12.4. Accordingly, the accommodation chambers 12.2,12.4 are delimited laterally by the crosswise beams 17.1-17.3 formed by the top plate 10. The battery pack frame covers 80.2,80.4 are configured to maintain pressure on the rechargeable battery cells 90 from the top over the entire cell stacks length. For illustrating this feature, a plurality of rechargeable battery cells 90 is assembled in the accommodation chamber 12.2, while there are no rechargeable battery cells 90 accommodated within the accommodation chamber 12.4. The dash-dotted line in the accommodation chamber 12.4 indicates an untensioned shape of the battery pack frame cover 80.4. When installing rechargeable battery cells 90, such as in the accommodation chamber 12.2, the battery pack frame cover 80.4 tensions and exerts a pressure on the upper side of the rechargeable battery cells 90. This design is advantageous in various aspects: Firstly, the rechargeable battery cells 90 are fixed inside the battery pack 1000 preventing the rechargeable battery cells 90 from falling over or shifting. Thus, the mechanical stability of the battery pack 1000 is improved as well as it is ensured that the electrical contacts within the battery pack 1000 remain intact. Secondly, as the rechargeable battery cells 90 are pressed against the section 52.2 of the cell cooler 50, direct contact between the rechargeable battery cells 90 and the cell cooler 50 is created ensuring effective cooling of the rechargeable battery cells 90.

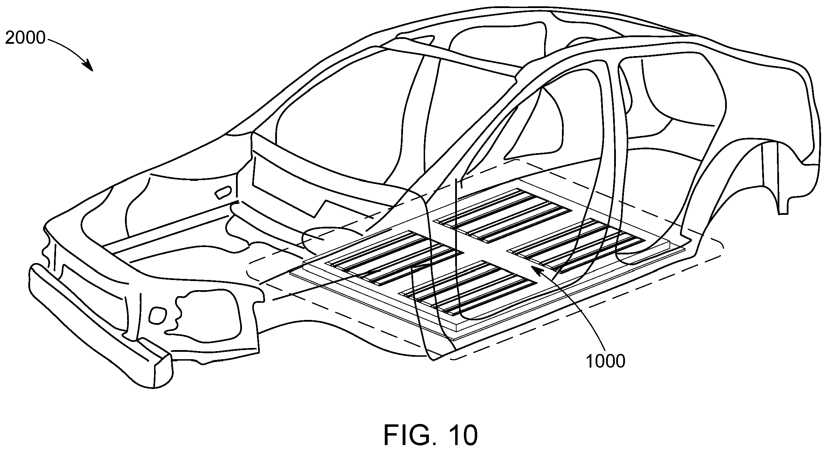

FIG. 10 is a schematic representation of an electric vehicle 2000 including the battery pack 1000 as illustrated in FIG. 8A.

### Reference signs

- 10: top plate
- 12.1-12.4: accommodation chamber
- 14.1-14.4: bottom side of accommodation chamber
- 16, 16.1-16.3: lengthwise beam
- 17, 17.1-17.3: crosswise beam
- 18, 18.1-18.10: reinforcement element
- 20, 20.1-20.3: tie-in point of lengthwise and crosswise beam
- 30: bottom plate
- 40, 40.1, 40.2: hollow tube
- 50: cell cooler
- 52.1-52.4: section of cell cooler
- 54.1-54.6: void of cell cooler
- 55: upper side of cell cooler
- 56: lower side of cell cooler
- 58, 58.1, 58.2: connecting element of the cell cooler
- 70: foam
- 72: space between top plate and bottom plate
- 74.1,74.2: separated area in space between top plate and bottom plate
- 80.1-80.4: battery pack frame cover
- 82, 82.1-82.2: corrugation of battery pack frame cover
- 83: battery cell vent cover
- 84: vent-gas channel
- 90, 90.1-90.4: rechargeable battery cell
- 100: battery pack frame
- 1000: battery pack
- 2000: electric vehicle

## Claims

1. A battery pack frame (100), comprising:
a top plate (10) configured to frame one or more accommodation chambers (12.1-12.4) for accommodating rechargeable battery cells (90), wherein the accommodation chambers (12.1-12.4) are delimited by intersecting lengthwise and crosswise beams (16,17) formed by the top plate (10);
a bottom plate (30) positioned below the top plate (10);
a cell cooler (50) enclosed by the top plate (10) and the bottom plate (30) for cooling the rechargeable battery cells (90), wherein the cell cooler (50) comprises sections (52.1-52.4) and voids (54.1-54.6) between the sections (52.1-52.4); and
a foam (70) filling a space (72) between the top plate (10) and the bottom plate (30), wherein the foam (70) extends through the voids (54.1-54.6) of the cell cooler (50).

2. The battery pack frame (100) as claimed in claim 1, wherein the top plate (10), the bottom plate (30), and the cell cooler (50) are metal plates.

3. The battery pack frame (100) as claimed in claims 1 and 2, wherein the top plate (10) and the bottom plate (30) are hold together by at least one of welding, soldering, clinching, screwing, bolting, and the foam (70).

4. The battery pack frame (100) as claimed in any one of the preceding claims, wherein the top plate (10) comprises one or more cut-outs in the area of a bottom side (14.1-14.4) of each accommodation chamber (12.1-12.4) such that the cell cooler (50) contacts the rechargeable battery cells (90) on its upper side (55) while contacting the foam (70) on its lower side (56).

5. The battery pack frame (100) as claimed in any one of the preceding claims, wherein one or more reinforcement elements (18) are installed in tie-in points (20.1-20.3) of the lengthwise and crosswise beams (16,17).

6. The battery pack frame (100) as claimed in any one of the preceding claims, wherein the bottom plate (30) includes pressed features selected from the group comprising of dimple elements, trapezoid shaped ribbing, and corrugated wave shapes.

7. The battery pack frame (100) as claimed in any one of the preceding claims, wherein the cell cooler (50) is a roll-bonding cooler.

8. The battery pack frame (100) as claimed in any one of the preceding claims, wherein the voids (54.1-54.6) of the cell cooler (50) are located underneath the lengthwise and crosswise beams (16,17).

9. The battery pack frame (100) as claimed in any one of the preceding claims, wherein the foam (70) consists of polyurethane.

10. The battery pack frame (100) as claimed in any one of the preceding claims, wherein the foam (70) is composed of two or more materials differing in at least one of density and stiffness, and wherein the space (72) between the top plate (10) and the bottom plate (30) is divided in as many spatially separated areas (74.1, 74.2) as there are materials so that each material fills a spatially separated area (74.1, 74.2) of the space (72) between the top plate (10) and the bottom plate (30).

11. A battery pack (1000) comprising:
the battery pack frame (100) as claimed in any one of the preceding claims;
a plurality of rechargeable battery cells (90) accommodated within the battery pack frame (100); and
battery pack frame covers (80.1-80.4) covering the accommodation chambers (12.1-12.4) of the battery pack frame (100).

12. The battery pack (1000) as claimed in claim 11, wherein each of the battery pack frame covers (80.1-80.4) is configured to maintain pressure on the rechargeable battery cells (90).

13. The battery pack (1000) as claimed in claims 11 and 12, wherein the battery pack frame covers (80.1-80.4) comprise corrugations (82) configured to form vent-gas channels (84) over the rechargeable battery cells (90).

14. An electric vehicle (2000) comprising the battery pack (1000) as claimed in any one of the claims 11 to 13.
